# EUROPEAN PATENT SPECIFICATION

(11) **EP 0 644 855 B1**
(45) Date of publication and mention of the grant of the patent: **04.06.1997**
(21) Application number: 93909835.6
(22) Date of filing: 26.04.1993
(51) Int. Cl.: C01F 7/06

(54) **PROCESS FOR THE EXTRACTION OF ALUMINA**
VERFAHREN ZUR EXTRAKTION VON ALUMINA
PROCEDE D'EXTRACTION D'OXYDE D'ALUMINIUM

(30) Priority: 30.04.1992 GB 9209313
(43) Date of publication of application: 29.03.1995
(73) Proprietor: ALCAN INTERNATIONAL LIMITED, Montreal Quebec H3A 3G2 (CA); ALUMINA ESPAGNOLA S.A., E-28003 Madrid (ES)
(72) Inventor: ALVARADO-CENDAN, Jose Manuel, E-27780 Foz, Lugo (ES); VERGHESE, Kachappillil, Ittoop, Beaconsfield, Quebec H9W 1E1 (CA)
(74) Representative: Wise, Stephen James
(86) International application number: EP9300999
(87) International publication number: WO9322238

(56) References cited:
- EP-A- 0 389 061
- US-A- 3 241 910
- US-A- 3 681 013
- US-A- 4 614 641
- DATABASE WPIL Week 8837, Derwent Publications Ltd., London, GB; AN 88-261471/37 & JP,A,63 190 709 (NIPPON LIGHT METAL KK) 8 August 1988

## Description

This invention relates to a process for the extraction of alumina from alumina-containing solid material, particularly the alumna-containing ores known as bauxite.

The most important commercial alumina extraction process is that known as the Bayer process in which alumina-containing ore is digested with an aqueous alkaline solution at an elevated temperature to extract from the ore the alumina values, i.e. the components of the ore which under the extraction conditions are removed from the body of the ore and can be recovered by processing in the form of alumina. The alumina thereby produced has a wide range of uses including as a raw material for the production of aluminium by conventional electrochemical processes.

In the Bayer process bauxite is digested by an aqueous alkaline solution at elevated temperatures, with the rate and efficiency of digestion depending upon both the temperature used and the concentration of the alkaline solution. Usually sodium hydroxide (caustic) is used as the alkali and its concentration in the extracting solution is usually described in terms of both the concentration of total caustic expressed as equivalent sodium carbonate, and the concentration of free caustic, again expressed as equivalent sodium carbonate. Free caustic is the hydroxide which is not associated with the aluminate Al(OH)₄, which is the dissolved form of alumina. It is highly desirable to use a high concentration of free caustic to extract the alumina, because the higher the free caustic concentration, the more alumina can be dissolved into, or carried away, per unit volume of the extracting liquor before saturation of the extracting solution is reached. The amount of saturation of the liquor is, at least in North America, expressed in terms of the alumina to caustic (A/C) ratio which is the ratio of Al₂O₃/Na₂CO₃, where Na₂CO₃ is the concentration of caustic expressed as equivalent sodium carbonate. For a spent or unsaturated liquor the A/C ratio is around 0.3, whilst for a nearly saturated liquor the ratio is around 0.7.

The alumina in bauxite generally exists in the form of alumina trihydrate (Al₂O₃.3H₂O or gibbsite) and/or alumina monohydrate (Al₂O₃.H₂O or boehmite, diaspore). Generally, alumina trihydrate is the main alumina component. The difference in solubility between the trihydrate and the monohydrate in aqueous alkaline solutions requires different conditions in the digestion process.

Alumina monohydrate is not as easily dissolved as alumina trihydrate. A higher caustic concentration and/or a higher digestion temperature and/or a lower alumina to caustic digestion ratio is required to dissolve substantially all the alumina monohydrate from the bauxite. Usually a higher digestion temperature is used to digest the monohydrate.

The bauxite for the Bayer process is usually ground before the extraction procedure. The grinding process is often a wet grinding process in which part of the spent liquor (usually between 5 and 25 per cent) is used. The other part of the spent liquor is directly used for the digestion step.

The digestion process may be classified on the basis of the preheating procedure into a one-stream process in which the bauxite and the aqueous alkaline solution necessary for the extraction are mixed together whereafter the mixture is subjected to preheating and extraction, and a two-stream process in which a slurry of the bauxite in a part of the aqueous alkaline solution, which slurry is usually obtained in the above-mentioned wet grinding process, and the remainder of the aqueous alkaline solution are preheated individually, mixed together and then subjected to extraction.

In low temperature plants, treating gibbsitic bauxite only, the separate preheating of spent liquor does not place any limit on the caustic concentration that can be employed in the process.

When bauxite containing an economically winnable amount of alumina monohydrate is used in the Bayer process, it is common practice that at least part of the digestion step is carried out at a high temperature, and thus also at high pressure. Two processes are in use for extracting alumina from such bauxites. In the first process the digestion of both mono- and trihydrate is carried out under digestion conditions suitable for monohydrate-containing ores. In the second process the trihydrate is first digested from the bauxite under digestion conditions suitable for trihydrate-containing ores and the resulting residue is then treated under digestion conditions suitable for monohydrate-containing ores.

Most Bayer plants separately preheat the spent liquor and bauxite slurry before mixing in the digesters for extraction of alumina from bauxite. In high temperature plants which process boehmitic bauxites, the caustic concentration that can be employed in the process is limited by the allowable free caustic in spent liquor; maximum 140-145 g/l. At higher free caustic concentration the indirect heat exchanger equipment suffers severe corrosion. This limitation can be overcome by the use of special materials which are not attacked by the hot caustic; but this is not economically justifiable at the present time.

In the past there had been two serious proposals to overcome the free caustic limitation in high temperature plants. (1) Single streaming, i.e. mixing of bauxite with all the recycled spent liquor and preheating the slurry. (2) Two step digestion in which the bauxite is digested to a low ratio under close to atmospheric conditions followed by separation of the solids and heating of the solid free liquor to digestion temperature in indirect heat exchangers and then re-mixing with the separated solids to complete the extraction of the alumina from bauxite.

The major disadvantage of the single streaming process is the erosion of the pumping system and the build up of scale deposits in the indirect heat exchange system. Another disadvantage arises from the 15-25% solids contained in the slurry. This solids content results in operating problems such as blocked heater tubes and settled coarse material in heater heads.

The disadvantage of the two step process, in its usual configuration, is the increase in the complexity of the process and the capital cost of the equipment because of the additional digestion and solid/liquid separation equipment.

A number of two stream extraction processes have been developed, such as those described in EP-A-0389061, US-3681013, US-3868442, US-3997650, US-4446117 and US-4614641. It is generally recognised that in the absence of special heat exchange equipment and process vessels which are resistant to alkaline attack, for the extraction of alumina from bauxite at temperatures at least as high as 240ºC the permissible free caustic concentration in the extracting solution is limited to from about 140 to about 145 g/l. At higher free caustic concentrations and at temperatures above 160ºC, it is known that there can be severe corrosion of the processing equipment used.

The present invention seeks to overcome the known limitations in the concentration of caustic used in conventional two stream extraction processes without the need to resort to extraction equipment specially made out of alkali-corrosion resistant materials. JP-A-63190709 discloses an extraction process in which, unlike the present invention, an intermediate insoluble residue separation step takes place.

In accordance with the present invention there is provided, a process for the extraction of alumina values from an alumina-containing solid material which method comprises:-
(a) providing the material in the form of a slurry in an alkaline solution having a concentration of free caustic therein sufficient at the temperature reached in step (c) to dissolve alumina values,
(b) classifying the slurry into a fine particle fraction and a coarse particle fraction,
(c) heating the fine particle fraction to a temperature sufficient to dissolve at least some and preferably substantially all of the alumina values therein with consequential reduction in the free caustic concentration in the liquid phase of the fine fraction slurry, and
(d) combining the coarse particle fraction from step (b) with the free caustic-depleted slurry liquid from step (c) at a temperature higher than that reached in step (c) so as to dissolve at least some and preferably substantially all of the alumina values in the coarse particle fraction.

In a preferred embodiment of the invention not all of the alkaline solution is used to prepare the slurry of bauxite particles, but rather a portion is used to dilute the slurry prior to passing through the heat exchangers, and also not all of the fine particle fraction is heated, but rather some of it is added unheated to the coarse particle portion and is sent directly to the high temperature digesters.

The steps of the preferred embodiment of the invention are:
(a) providing the material in the form of a slurry in a portion of the alkaline solution having a concentration of free caustic therein sufficient at the temperature reached in step (c) to dissolve the alumina values therein,
(b) classifying the slurry into a fine particle fraction and a coarse particle fraction,
(c) adding a sufficient quantity of this fine particle fraction to another portion of the alkaline solution such that the dissolution of alumina from this fine particle fraction will reduce the free caustic in the combined alkaline solution-fine particle fraction to less than 145 g/l,
(d) heating the combined alkaline solution-fine particle fraction to a temperature sufficient to dissolve substantially all of the alumina values therein with consequential reduction in the free caustic concentration in the liquid phase, and
(e) combining the coarse particle fraction and the remaining fine particle fraction, not used in step (c), and adding this combined stream to the heated combined alkaline solution-fine particle fraction from step (d), so as to dissolve substantially all of the alumina values from the solids therein.

Generally a plurality of indirect heat exchangers arranged in series are used to effect the required heating.

Preferably the alumina-containing solid material is bauxite and the alumina present in the material is in the form of alumina monohydrate, such as boehmite, and alumina trihydrate, such as gibbsite.

Some two stream extraction processes, such as that described in EP-A-0389061, are based on the difference in solubilities of alumina monohydrate and alumina trihydrate. The present invention is based on classifying the bauxite slurry according to particle size prior to digestion. After classification, all or part of the fine particle size material is sent through the plurality of heat exchangers where it is heated to a higher temperature, while the coarse material is sent directly to the high temperature digesters, and bypasses the plurality of heat exchangers. Two important benefits accrue from this classification and splitting of the streams:
1. The fine bauxite particles dissolve rapidly at the temperatures generated in the heat exchangers, and thereby reduce the concentration of free caustic to a level at which there is little danger of damage to the materials of construction of the processing apparatus when the temperature of the stream is raised above 160ºC; and
2. The coarse bauxite particles are excluded from the heat exchangers where otherwise they will cause erosion of the materials of construction due to their size and abrasive nature, and are sent directly to the digesters which, because of their size and design, are not subject to erosion by abrasive particles.

By classifying the slurried material and digesting the fine particle fraction at relatively low temperatures before using it to extract the coarse particle fraction at higher temperatures, it is possible to obtain a more efficient extraction process than heretofore known.

In essence the process of the present invention resides in subjecting the extracting alkaline solution which is usually recycled spent extraction liquor from the end of the process containing typically from 200 to 350 g/l of total caustic, more usually between 250 and 280 g/l total caustic and usually 160 to 170 g/l of free caustic, and an A/C ratio of about 0.35, to two successive stages of reaction with bauxite with a slurry classification stage being used prior to the first of these two stages. The slurry to be classified in this preliminary stage is produced by any conventional grinding process, but the concentration of free caustic therein should be sufficient at the temperature reached in the first extraction stage to dissolve at least some and preferably all of the aluminium values in the alumina-containing material extracted in that stage. Before any digestion takes place, the bauxite slurry is split into two portions by classification on a screen or by a hydrocyclone, or by any other known process. To prevent erosion of the heat exchanger components by the coarse particles of bauxite, the heat exchangers are fed with a slurry containing only fine particles of bauxite, generally between 35 and 100 mesh (US Tyler), with smaller than 74 mesh (US Tyler) being preferred for the conditions described in the following description.

In the preferred embodiment of the present invention, a portion of the slurry produced by the wet grinding of bauxite in spent liquor is subjected to the two stage treatment. The bauxite slurry is split into two portions by classification on a screen or by hydrocyclone, one portion contains the fines less than 74 mesh size, the second contains the coarse particles greater than 74 mesh. The slurry containing the fines is injected into the bulk of the spent liquor to give a mixed slurry containing 40 to 120 g/l, and more usually 60 to 100 g/l of fines, and passed through the low temperature heat exchangers where it is subjected to a relatively low temperature of between 120 and 160ºC. At this temperature the fine particles in the slurry dissolve quickly, and give a liquor with an A/C ratio of 0.45, corresponding to a loading of 30 to 35 g/l of dissolved alumina. This treatment effectively reduces the free caustic concentration from 160 g/l to 135 g/l which poses no danger to the high temperature heat exchange equipment which follows in the circuit. The slurry is then passed through the high temperature heat exchangers which will heat it to about 240ºC or higher. There is no danger in heating to 240ºC or higher under these conditions, because the free caustic concentration in the liquor has been reduced to the safe concentration of below 145 g/l by virtue of the first stage treatment with the fine particles of bauxite.

In the second stage which is the high temperature digestion stage, the slurry now heated to about 220ºC or higher and, containing around from 6 to 55 g/l, and more usually around 9 g/l of undissolved solids and only around 135 g/l of free caustic, is combined with the portion of slurry containing the bulk of coarser bauxite which is larger than 74 mesh. The mixed slurry is fed into digesters which provide the required residence time for the extraction reaction, and is then heated by injection of steam to the temperature of 240ºC and higher required for the extraction of the more difficult to dissolve boehmitic alumina content of the bauxite.

The fine bauxite slurry required for passing through the first low temperature heat exchangers is obtained by classification of the bauxite slurry produced by the wet grinding mills. In the usual practice, the slurry from the mills is discharged into a desilication circuit made up of a series of holding tanks held at temperatures between 60 and 100ºC. In this circuit the kaolinitic silica content of the bauxite dissolves quickly, and then slowly precipitates as Bayer sodalite which is an insoluble form of sodium aluminium silicate. At the end of the series of holding tanks the slurry is diluted with additional spent liquor, and then is classified by either passing it through a hydrocyclone or through a screen such as an inclined washed DSM^{RTM} (Dutch State Mines) screen to give a coarse fraction, which is retained by US Tyler Screen size of 74 mesh, and a fine fraction which passes through the 74 mesh Tyler Screen. These fine particles of bauxite dissolve readily in the spent liquors when the temperature is raised to around 160ºC.

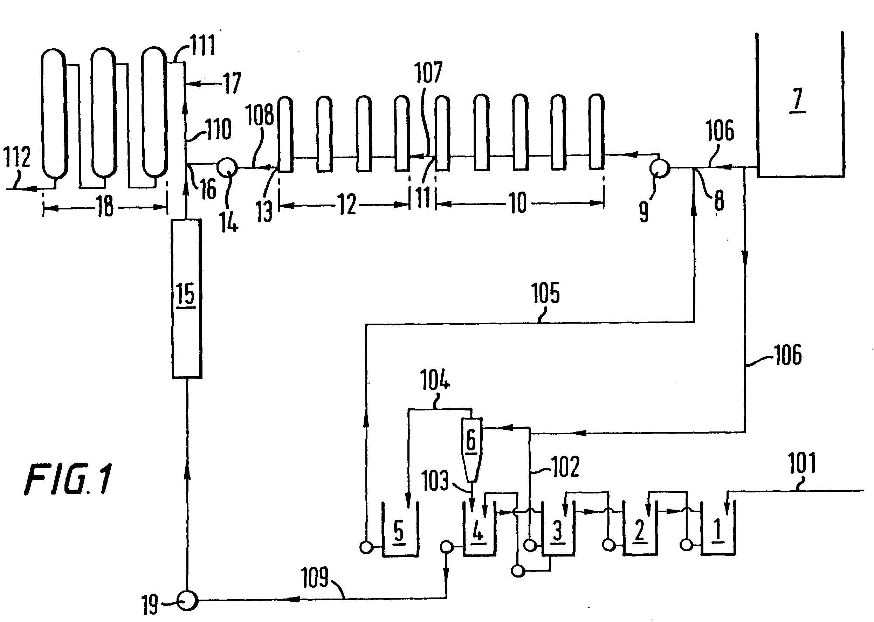

A particular embodiment of the process of the invention will now be described by way of example with reference to Figure 1. The slurry of bauxite 101 from the wet mills (not shown) containing about 35 to 60% by weight of solids is discharged into the first of the four tanks 1, 2, 3, 4 of the desilication circuit. These tanks operate in a back flow fashion at temperatures ranging from about 60 to 100ºC, with the overflow from each tank being returned to the preceding tank in the series, while the underflow is pumped to the next tank in the series. Part of the discharge 102 from tank 3 is injected with spent liquor 106 from tank 7 to provide the dilution required to carry out particle size classification, and is sent to a classification device, in this embodiment a hydrocyclone 6. The underflow 103 from the hydrocyclone 6 containing from 30 to at least 60% solid material is discharged into holding tank 4, while the overflow 104 containing 10 to 30%, or 150 to 450 g/l, of the fine material of less than 74 mesh is sent to the surge tank 5.

The slurry of fine bauxite 105 from surge tank 5 is then combined at junction point 8 with additional spent liquor 106 from the spent liquor tank 7, which contains 250 g/l total caustic, 160 g/l of free caustic, and has an A/C ratio of around 0.35. This slurry is then forced by pump 9 through the series of low temperature heat exchangers 10, in this embodiment five heat exchangers being used. The fine bauxite in the combined streams dissolves rapidly, so that the composition of the combined streams at the first heating stage outlet 10 is about 45 g/l solids at an A/C ratio of 0.45. At the exit of this series 11 the temperature of the slurry 107 has been raised to between 150 and 170ºC, and most of the fine bauxite particles are dissolved, so that the final concentration of solids is about 16 g/l, and the concentration of free caustic in the liquid phase of the slurry is reduced to 130 g/l. The free caustic content of this slurry has now been lowered sufficiently by virtue of the dissolution of the fine bauxite particles that it can be safely heated in the high temperature heat exchangers. The slurry continues through a second series of high temperature heat exchangers 12 - in this embodiment four exchangers are used - and at the exit 13 of this series the exiting slurry 108 has a temperature of 200 to 230ºC, the solids concentration therein is between 9 and 30 g/l, and the free caustic concentration is around 120 g/l.

The slurry of coarse bauxite 109 from tank 4 is sent by pump 19 to the high pressure pump 15 to the junction point 16. Here it is combined with the preheated slurry 108 exiting from pump 14. To raise the temperature still further, the combined streams 110 are injected with live steam at 17. This stream 111 is then fed into the high temperature digesters 18, in this embodiment three digesters are shown. Additional steam may be injected into the digesters to obtain the required temperatures. The composition of the combined slurry 111 entering the digesters 18 is 250 g/l of total caustic and 130 g/l of free caustic. The slurry of this composition can be safely heated to 240ºC or higher to dissolve the coarse particles of bauxite and obtain the complete dissolution of the boehmitic alumina in the residence time available in the high temperature digesters 18 to yield product stream 112.

The product stream 112 is then cooled and stripped of at least some of its alumina values by conventional means (not shown) and the spent liquor can, if desired, be recycled after the addition of fresh caustic as slurry stream 106, and can be used to make slurry stream 101.

## Claims

1. A process for the extraction of alumina values from an alumina-containing solid material which process comprises:-
(a) providing the material in the form of a slurry in an alkaline solution having a concentration of free caustic therein sufficient at the temperature reached in step (c) to dissolve alumina values,
(b) classifying the slurry into a fine particle fraction and a coarse particle fraction,
(c) heating the fine particle fraction to a temperature sufficient to dissolve at least some of the alumina values therein with consequential reduction in the free caustic concentration in the liquid phase of the fine fraction slurry, and
(d) combining the coarse particle fraction from step (b) with the free caustic-depleted slurry liquid from step (c) at a temperature higher than that reached in step (c) so as to dissolve at least some of the alumina values in the coarse particle fraction.

2. A process as claimed in claim 1 wherein the alumina-containing solid material is bauxite and the alumina is present in the material in the form of alumina monohydrate and alumina trihydrate.

3. A process as claimed in claim 1 or claim 2 wherein the slurry in step (a) has a concentration of free caustic of at least 140 g/l expressed as equivalent sodium carbonate.

4. A process as claimed in claim 3 wherein the slurry in step (a) has a concentration of free caustic of 160 to 170 g/l expressed as equivalent sodium carbonate.

5. A process as claimed in any one of the preceding claims wherein the slurry in step (a) has a concentration of total caustic of from 200 to 350 g/l expressed as equivalent sodium carbonate.

6. A process as claimed in claim 5 wherein the slurry in step (a) has a concentration of total caustic of from 250 to 280 g/l expressed as equivalent sodium carbonate.

7. A process as claimed in any one of the preceding claims wherein the free caustic-depleted liquid phase of the fine fraction slurry of step (c) has a concentration of free caustic of not- greater than 145 g/l expressed as equivalent sodium carbonate.

8. A process as claimed in claim 6 wherein the free caustic-depleted liquid phase of the fine fraction slurry of step (c) has a concentration of free caustic of from 60 to 130 g/l.

9. A process as claimed in any one of the preceding claims wherein in the classifying step of step (b) the fine particle fraction formed contains substantially all of the particles of a size between 35 and 100 mesh (US Tyler).

10. A process as claimed in claim 9 wherein in the classifying step of step (b) the fine particle fraction formed contains substantially all of the particles of a size smaller than 74 mesh (US Tyler).

11. A process as claimed in any one of the preceding claims wherein in step (b) the slurry is heated to a temperature of from 120 to 160°C.

12. A process as claimed in claim 11 wherein the slurry is heated to less than 160°C.

13. A process as claimed in any one of the preceding claims wherein substantially all of the said alumina values are dissolved in step (c).

14. A process as claimed in any one of the preceding claims wherein in step (d) the dissolution temperature is at least 200ºC.

15. A process as claimed in claim 14 wherein the dissolution temperature is at least 240ºC.

16. A process as claimed in any one of the preceding claims wherein substantially all of the said alumina values are dissolved in step (d).

17. A process as claimed in any one of the preceding claims comprising the steps of:-
(a) providing the material in the form of a slurry in a portion of the alkaline solution having a concentration of free caustic therein sufficient at the temperature reached in step (c) to dissolve the alumina values therein,
(b) classifying the slurry into a fine particle fraction and a coarse particle fraction,
(c) adding a sufficient quantity of this fine particle fraction to another portion of the alkaline solution such that the dissolution of alumina from this fine particle fraction will reduce the free caustic in the combined alkaline solution-fine particle fraction to less than 145 g/l,
(d) heating the combined alkaline solution-fine particle fraction to a temperature sufficient to dissolve substantially all of the alumina values therein with consequential reduction in the free caustic concentration in the liquid phase, and
(e) combining the coarse particle fraction and the remaining fine particle fraction, not used in step (c), and adding this combined stream to the heated combined alkaline solution-fine particle fraction from step (d), so as to dissolve substantially all of the alumina values from the solids therein.

18. A process for the extraction of alumina values from a bauxite, which may be composed of a significant amount of monohydrate or boehmitic alumina comprising:
slurrying the bauxite in spent liquor which contains from 200 to 350 g/l of total caustic and more than 140 g/l of free caustic, expressed as equivalent Na₂CO₃;
classifying the bauxite feed slurry stream into a fine particle and a coarse particle fraction;
heating the fine particle fraction in two series of at least one indirect heat exchanger;
in the first series of indirect heat exchangers the slurry is heated to about 160ºC, whereupon the fine particles of bauxite dissolve rapidly to give a liquor containing less than 145 g/l of free caustic expressed as equivalent Na₂CO₃;
in the second set of indirect heat exchangers the slurry is heated to about 220ºC;
combining the stream from the indirect heat exchangers with the slurry containing the coarser particles; and
feeding the combined streams to at least one high temperature, high pressure digester, where the extraction of the alumina values from the combined streams is obtained.

## Patentansprüche

1. Verfahren zur Extraktion von Aluminiumoxid aus einem Aluminiumoxid enthaltenden festen Material, umfassend:
(a) Bereitstellung des Materials in der Form einer Aufschlämmung in einer alkalischen Lösung mit einer Konzentration von freiem Ätzalkali darin, die bei den in Schritt (c) erreichten Temperaturen zum Lösen von Aluminiumoxid ausreichend ist,
(b) Klassieren der Aufschlämmung in eine feine Kornfraktion und eine grobe Kornfraktion,
(c) Erhitzen der feinen Kornfraktion auf eine Temperatur, die ausreichend ist, um mindestens einiges darin enthaltenes Aluminiumoxid zu lösen, mit daraus folgender Verringerung in der Konzentration an freiem Ätzalkali in der flüssigen Phase der feinen Aufschlämmungsfraktion, und
(d) Zusammenführen der groben Kornfraktion aus Schritt (b) mit der an freiem Ätzalkali abgereicherten Aufschlämmungsflüssigkeit aus Schritt (c) bei einer Temperatur, die höher ist als die in Schritt (c) erreichte, um so mindestens einiges Aluminiumoxid in der groben Kornfraktion zu lösen.

2. Verfahren nach Anspruch 1, worin das Aluminiumoxid enthaltende feste Material Bauxit ist und das Aluminiumoxid in dem Material in Form des Aluminiumoxid-Monohydrats und des Aluminiumoxid-Trihydrats vorliegt.

3. Verfahren nach Anspruch 1 oder 2, worin die Aufschlämmung in Schritt (a) eine Konzentration an freiem Ätzalkali von mindestens 140 g/l hat, ausgedrückt als äquivalentes Natriumkarbonat.

4. Verfahren nach Anspruch 3, worin die Aufschlämmung in Schritt (a) eine Konzentration an freiem Ätzalkali von 160 bis 170 g/l hat, ausgedrückt als äquivalentes Natriumkarbonat.

5. Verfahren nach einem der vorangehenden Ansprüche, worin die Aufschlämmung in Schritt (a) eine Konzentration an gesamten Ätzalkali von 200 bis 350 g/l hat, ausgedrückt als äquivalentes Natriumkarbonat.

6. Verfahren nach Anspruch 5, worin die Aufschlämmung in Schritt (a) eine Konzentration an gesamten Ätzalkali von 250 bis 280 g/l hat, ausgedrückt als äquivalentes Natriumkarbonat.

7. Verfahren nach einem der vorangehenden Ansprüche, worin die an freiem Ätzalkali abgereicherte flüssige Phase der feinen Aufschlämmungsfraktion des Schritts (c) eine Konzentration an freiem Ätzalkali von nicht größer als 145 g/l hat, ausgedrückt als äquivalentes Natriumkarbonat.

8. Verfahren nach Anspruch 6, worin die an freiem Ätzalkali abgereicherte flüssige Phase der feinen Aufschlämmungsfraktion des Schritts (c) eine Konzentration an freiem Ätzalkali von 60 bis 130 g/l hat.

9. Verfahren nach einem der vorangehenden Ansprüche, worin in dem Klassierungsschritt gemäß Schritt (b) die gebildete feine Kornfraktion im wesentlichen alle der Partikel einer Größe zwischen 35 und 100 mesh (US Tyler) enthält.

10. Verfahren nach Anspruch 9, worin in dem Klassierungsschritt gemäß Schritt (b) die gebildete feine Kornfraktion im wesentlichen alle der Partikel einer Größe enthält, die kleiner ist als 74 mesh (US Tyler).

11. Verfahren nach einem der vorangehenden Ansprüche, worin in Schritt (b) die Aufschlämmung auf eine Temperatur zwischen 120 bis 160°C erhitzt wird.

12. Verfahren nach Anspruch 11, worin die Aufschlämmung auf weniger als 160°C erhitzt wird.

13. Verfahren nach einem der vorangehenden Ansprüche, worin im wesentlichen alles Aluminiumoxid in Schritt (c) gelöst wird.

14. Verfahren nach einem der vorangehenden Anspüche, worin in Schritt (d) die Lösungstemperatur mindestens 200°C beträgt.

15. Verfahren nach Anspruch 14, worin die Lösungstemperatur mindestens 240°C beträgt.

16. Verfahren nach einem der vorangehenden Ansprüche, worin im wesentlichen alles Aluminiumoxid in Schritt (d) gelöst wird.

17. Verfahren nach einem der vorangehenden Ansprüche, umfassend die Schritte:
(a) Bereitstellung des Materials in der Form einer Aufschlammung in einem Teil der alkalischen Lösung mit einer Konzentration von freiem Ätzalkali darin, die bei den in Schritt (c) erreichten Temperaturen zum Lösen des Aluminiumoxids darin ausreichend ist,
(b) Klassieren der Aufschlämmung in eine feine Kornfraktion und eine grobe Kornfraktion,
(c) Zusetzen einer ausreichenden Menge dieser feinen Kornfraktion zu einem anderen Teil der alkalischen Lösung, derart, daß die Lösung von Aluminiumoxid aus dieser feinen Kornfraktion das freie Ätzalkali in der zusammengeführten alkalischen Lösung-feine Kornfraktion auf weniger als 145 g/l verringern wird,
(d) Erhitzen der zusammengeführten alkalischen Lösung-feine Kornfraktion auf eine Temperatur, die ausreichend ist, im wesentlichen alles darin enthaltenes Aluminiumoxid zu lösen, mit daraus folgender Verringerung in der freien Ätzalkalikonzentration in der flüssigen Phase, und
(e) Zusammenführen der groben Kornfraktion und der übrigen feinen Kornfraktion, die in Schritt (c) nicht verwendet wurde, und Hinzufügen dieses zusammengefaßten Stroms zu der erhitzten zusammengeführten alkalischen Lösung-feine Kornfraktion aus Schritt (d), um so im wesentlichen alles Aluminiumoxid aus den darin befindlichen Festsubstanzen zu lösen.

18. Verfahren zur Extraktion von Aluminiumoxid aus einem Bauxit, welches zusammengesetzt sein kann aus einer bedeutenden Menge von Monohydrat- oder Boehmit-Aluminiumoxid, umfassend:
Aufschlämmen des Bauxits in Ablauge, welche von 200 bis 350 g/l Gesamtätzalkali und mehr als 140 g/l freies Ätzalkali enthält, ausgedrückt als äquivalentes Na₂CO₃;
Klassieren des zugeführten Bauxit-Aufschlämmungsstroms in eine feine Korn- und eine grobe Kornfraktion;
Erhitzen der feinen Kornfraktion in zwei Reihen von mindestens einem indirekten Wärmetauscher;
in der ersten Reihe indirekter Wärmetauscher wird die Aufschlämmung auf etwa 160°C erhitzt, worauf sich die feinen Bauxitpartikel rasch lösen, um eine Lauge zu ergeben, die weniger als 145 g/l an freiem Ätzalkali enthält, ausgedrückt als äquivalentes Na₂CO₃;
in dem zweiten Satz indirekter Wärmetauscher wird die Aufschlämmung auf etwa 220°C erhitzt;
Zusammenführen des Stroms aus den indirekten Wärmetauschern mit der die gröberen Partikel enthaltenden Aufschlämmung; und
Zuführen der vereinigten Ströme zu mindestens einem Hochtemperatur-Hochdruck-Digestor, wo die Extraktion des Aluminiumoxids aus den vereinigten Strömen erhalten wird.

## Revendications

1. Procédé pour l'extraction de valeurs d'alumine à partir d'un matériau solide contenant de l'alumine, ce procédé comprenant :
(a) la fourniture du matériau sous la forme d'une suspension dans une solution alcaline ayant une concentration de soude caustique libre dans celle-ci qui est suffisante, à la température atteinte au cours de l'étape (c), pour dissoudre des valeurs d'alumine,
(b) la classification de la suspension en une fraction de particules fines et une fraction de particules grossières,
(c) le chauffage de la fraction de particules fines à une température suffisante pour dissoudre au moins une partie des valeurs d'alumine dans celle-ci, avec une réduction consécutive de la concentration de soude caustique libre dans la phase liquide de la suspension de fraction fine, et
(d) la combinaison de la fraction de particules grossières de l'étape (b) avec le liquide de suspension appauvri en soude caustique libre de l'étape (c) à une température supérieure à celle atteinte dans l'étape (c), de façon à dissoudre au moins une partie des valeurs d'alumine dans la fraction de particules grossières.

2. Procédé selon la revendication 1, dans lequel le matériau solide contenant de l'alumine est de la bauxite, et l'alumine est présente dans le matériau sous la forme de monohydrate d'alumine et de trihydrate d'alumine.

3. Procédé selon la revendication 1 ou la revendication 2, dans lequel la suspension dans l'étape (a) a une concentration de soude caustique libre d'au moins 140 g/l exprimée en équivalent carbonate de sodium.

4. Procédé selon la revendication 3, dans lequel la suspension dans l'étape (a) a une concentration de soude caustique libre comprise entre 160 et 170 g/l exprimée en équivalent carbonate de sodium.

5. Procédé selon l'une quelconque des revendications précédentes, dans lequel la suspension dans l'étape (a) a une concentration de soude caustique totale comprise entre 200 et 350 g/l exprimée en équivalent carbonate de sodium.

6. Procédé selon la revendication 5, dans lequel la suspension dans l'étape (a) a une concentration de soude caustique totale comprise entre 250 et 280 g/l exprimée en équivalent carbonate de sodium.

7. Procédé selon l'une quelconque des revendications précédentes, dans lequel la phase liquide appauvrie en soude caustique libre de la suspension de fraction fine de l'étape (c) a une concentration de soude caustique libre qui n'est pas supérieure à 145 g/l, exprimée en équivalent carbonate de sodium.

8. Procédé selon la revendication 6, dans lequel la phase liquide appauvrie en soude caustique libre de la suspension de fraction fine de l'étape (c) a une concentration de soude caustique libre comprise entre 60 et 130 g/l.

9. Procédé selon l'une quelconque des revendications précédentes, dans lequel, dans l'étape de classification de l'étape (b), la fraction de particules fines formée contient sensiblement la totalité des particules d'une taille comprise entre 35 et 100 mesh (US Tyler).

10. Procédé selon la revendication 9, dans lequel, dans l'étape de classification de l'étape (b), la fraction de particules fines formée contient sensiblement toutes les particules d'une taille inférieure à 74 mesh (US Tyler).

11. Procédé selon l'une quelconque des revendications précédentes, dans lequel, dans l'étape (b), la suspension est chauffée à une température comprise entre 120 et 160°C.

12. Procédé selon la revendication 11, dans lequel la suspension est chauffée à une température inférieure à 160°C.

13. Procédé selon l'une quelconque des revendications précédentes, dans lequel sensiblement toutes lesdites valeurs d'alumine sont dissoutes au cours de l'étape (c).

14. Procédé selon l'une quelconque des revendications précédentes, dans lequel, dans l'étape (d), la température de dissolution est d'au moins 200°C.

15. Procédé selon la revendication 14, dans lequel la température de dissolution est d'au moins 240°C.

16. Procédé selon l'une quelconque des revendications précédentes, dans lequel sensiblement toutes lesdites valeurs d'alumine sont dissoutes au cours de l'étape (d).

17. Procédé selon l'une quelconque des revendications précédentes, comprenant les étapes suivantes :
(a) la fourniture du matériau sous la forme d'une suspension dans une partie de la solution alcaline ayant une concentration de soude caustique libre dans celle-ci qui est suffisante, à la température atteinte au cours de l'étape (c), pour dissoudre les valeurs d'alumine à l'intérieur de celle-ci,
(b) la classification de la suspension en une fraction de particules fines et une fraction de particules grossières,
(c) l'addition d'une quantité suffisante de cette fraction de particules fines à une autre partie de la solution alcaline de telle sorte que la dissolution de l'alumine de cette fraction de particules fines réduise la soude caustique libre dans la solution alcaline-fraction de particules fines combinée à moins de 145 g/l,
(d) le chauffage de la solution alcaline-fraction de particules fines combinée à une température suffisante pour dissoudre sensiblement toutes les valeurs d'alumine dans celle-ci, avec une réduction consécutive de la concentration de soude caustique libre dans la phase liquide, et
(e) la combinaison de la fraction de particules grossières et de la fraction de particules fines restante, qui n'a pas été utilisée au cours de l'étape (c), et l'addition de ce courant combiné à la solution alcaline-fraction de particules fines combinée chauffée de l'étape (d), de façon à dissoudre sensiblement toutes les valeurs d'alumine des solides dans celle-ci.

18. Procédé pour l'extraction de valeurs d'alumine à partir d'une bauxite, qui peut être composée d'une quantité significative de monohydrate ou d'alumine boehmitique, comprenant :
la mise en suspension de la bauxite dans la liqueur usée qui contient entre 200 et 350 g/l de soude caustique totale et plus de 140 g/l de soude caustique libre, exprimées en équivalent Na₂CO₃;
la classification du courant de suspension de charge de bauxite en une fraction de particules fines et une fraction de particules grossières ;
le chauffage de la fraction de particules fines dans deux séries d'au moins un échangeur de chaleur indirect ;
dans la première série d'échangeurs de chaleur indirects, le chauffage de la suspension à environ 160°C, après quoi les particules fines de bauxite se dissolvent rapidement de façon à donner une liqueur contenant moins de 145 g/l de soude caustique libre exprimée en équivalent Na₂CO₃;
dans le deuxième jeu d'échangeurs de chaleur indirects, le chauffage de la suspension à environ 220°C ;
la combinaison du courant des échangeurs de chaleur indirects avec la suspension contenant les particules les plus grossières ; et
la délivrance des courants combinés à au moins un digesteur à haute pression et à haute température, où l'extraction des valeurs d'alumine des courants combinés est obtenue.
